# EUROPEAN PATENT SPECIFICATION

(11) **EP 2 905 467 B1**
(45) Date of publication and mention of the grant of the patent: **22.02.2017**
(21) Application number: 12890159.2
(22) Date of filing: 19.12.2012
(51) Int. Cl.: F03D 80/00, F03D 7/04, F03D 15/00, F03D 1/00, F03D 7/02

(54) **WIND TURBINE GENERATOR AND METHOD FOR LOCKING ROTATION OF ROTOR HEAD OF SAME**
WINDTURBINE UND VERFAHREN ZUM BLOCKIEREN DER ROTORKOPFDREHBEWEGUNG
EOLIENNE ET PROCÉDÉ POUR VERROUILLER LA ROTATION DE SA TÊTE DE ROTOR

(43) Date of publication of application: 12.08.2015
(73) Proprietor: Mitsubishi Heavy Industries, Ltd., Tokyo 108-8215 (JP)
(72) Inventor: TAKAYANAGI, Kazufumi, Tokyo 108-8215 (JP); ICHINOSE, Hidekazu, Tokyo 108-8215 (JP)
(74) Representative: Intès, Didier Gérard André
(86) International application number: PCT/JP2012/082978
(87) International publication number: WO 2014/097433

(56) References cited:
- EP-A2- 2 072 814
- WO-A1-2005/090780
- WO-A1-2005/090780
- WO-A1-2008/059088
- WO-A1-2011/101957
- JP-A- S 623 176
- JP-A- 2009 544 880
- JP-B1- 4 969 712

## Description

### Technical Field

The present invention relates to a wind turbine generator equipped with a lock mechanism of a wind turbine rotor suitable for, for example, an off-shore wind turbine installed on the sea, and a method for locking the rotation of a rotor head of the same.

### Background Art

In the related art, wind turbine generators are equipped with a lock mechanism (locking device), which locks the rotation of a rotor head (wind turbine rotor) that rotates together with wind turbine blades, in order to cope with maintenance or the like.

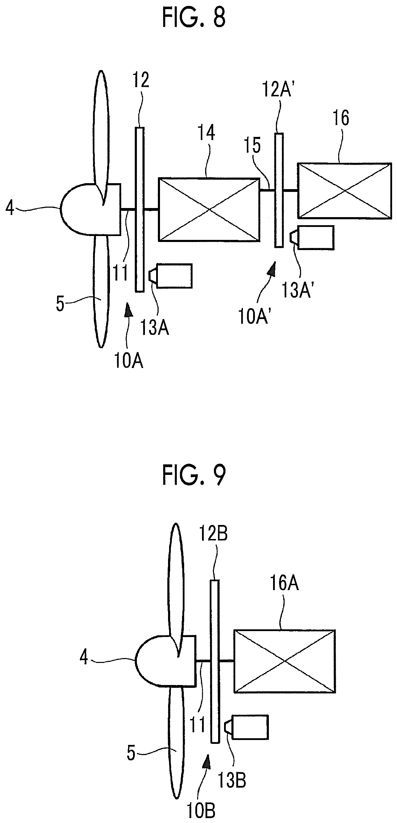

A brake mechanism attached to a main shaft 11 that rotates integrally with a rotor head 4 is used for a lock mechanism 10A of an increasing gear type wind turbine generator illustrated in Fig. 8. The lock mechanism 10A is a device that mechanically prevents rotation by providing a brake disk 12A with a lock pin hole (not illustrated) in advance and inserting a lock pin 13A into the lock pin hole.

In this case, reference numeral 14 in the drawing represents an increasing gear, reference numeral 15 represents an output shaft of the increasing gear 14, and reference numeral 16 represents a generator. If necessary, the output shaft 15 is also provided with a lock mechanism 10A' equipped with a brake disk 12A' and a lock pin 13A'.

Additionally, since a wind turbine generator of a direct drive type illustrated in Fig. 9 does not have the above-described increasing gear 14, the main shaft 11 and a generator 16A are directly connected to each other. The lock mechanism 10B in this case, similar to the above-described lock mechanism 10A, has a structure in which a lock pin 13B is inserted into a lock hole of a brake disk 12B attached to the main shaft 11 and prevents rotation.

Even in the configuration of any of such related-art lock mechanisms 10A, 10A', and 10B, the lock pins 13A, 13A', and 13B are manually inserted while a worker in a nacelle visually confirms the position of the lock pin hole.

Additionally, the following Patent Document 1 and 2 disclose using a sensor for determining a rotational position, in a locking device of a wind turbine generator in which a pin is inserted into an opening of a disk that rotates together with a main shaft. In addition, using the pin for fixation of the wind turbine rotor is also disclosed in the following PTLs 3 and 4.

### Citation List

### Patent Literature

[PATENT DOCUMENT 1] Specification of US Patent No. 7397145
[PATENT DOCUMENT 2] Specification of US Patent Application Publication No. 2010/0194114
[PATENT DOCUMENT 3] International Publication No. WO2011/141594
[PATENT DOCUMENT 4] International Publication No. WO2008/059088
EP 2 072 814 discloses a braking and positioning system for a wind turbine rotor.

### Summary of Invention

### Technical Problem

Incidentally, for example, in wind turbine generators like off-shore wind turbines, access using a helicopter or the like aiming at rescue or urgent maintenance in addition to normal maintenance is required.

In this case, in order to avoid a situation where the helicopter that has approached a wind turbine generator collides against wind turbine blades, it is necessary to stop the rotation of the wind turbine rotor by means of a remote operation and to securely lock the wind turbine rotor. The remote operation in this case means, for example, performing an operation from a position in the vicinity of a tower for the wind turbine generator like the bottom of the tower or the outside of the tower, access movement means, such as a helicopter or a ship, or remote places, such as land.

However, in order to securely lock the rotation of the wind turbine rotor at a predetermined position (azimuth angle) by means of a remote operation, it is necessary to perform the insertion operation of the lock pin while automatically determining the position of the lock pin hole.

Simultaneously, a monitoring device that determines that the lock pin has been securely inserted into the lock pin hole, and also a monitoring device that confirms that the lock mechanism release of pulling out the lock pin has been securely performed are required.

The invention has been made in view of the above situation, and an object thereof is to provide a wind turbine generator equipped with a lock mechanism that locks a wind turbine rotor securely at a prescribed azimuth angle by mean of a remote operation, thereby preventing rotation of the rotor, and a method for locking the rotation of a rotor head of the same.

Moreover, another object of the invention is to provide a wind turbine generator equipped with a monitoring function that can confirm secure operation of the lock mechanism.

### Solution to Problem

The invention has adopted the following means in order to solve the above problems.

A wind turbine generator related to the invention is defined by claim 1 and includes: a brake mechanism including a brake disk provided in a drive system that transmits rotation from a rotor head to a generator; a lock mechanism that fixes the rotor head by inserting a lock pin into a lock pin hole provided in the brake disk; a turning mechanism that rotates the rotor head as needed; a control unit that controls the operation of at least the brake mechanism, the lock mechanism and the turning mechanism; a remote operation unit that outputs to the control unit a command to lock the rotor head by means of the lock mechanism; and a lock pin hole position monitoring device that detects or estimates the current position of the lock pin hole, which is used to determine whether or not the lock pin can be inserted, and that inputs this position to the control unit.

According to such a wind turbine generator, since the device is equipped with the lock pin hole position monitoring device that detects or estimates the current position of the lock pin hole for determining whether or not the lock pin can be inserted, and that inputs this position to the control unit, even if the lock mechanism is operated by means of a remote operation, whether or not the lock pin can be inserted at the current position of the lock pin hole can be automatically determined. Therefore, the lock pin can be securely inserted into the lock pin hole, and rotation of the rotor head can be fixed.

In the above wind turbine generator, the lock mechanism includes a drive mechanism that allows the lock pin to project or retreat in an axial direction of the lock pin, and includes a non-lock position where a tip of the lock pin is at a position apart from a surface of the brake disk, an insertion preparation position where the tip of the lock pin is made to abut against and is pressed against the surface of the brake disk at a position in the vicinity of a position just before a turning direction of the lock pin insertion hole, and a lock position where the lock pin is inserted into and fixed to the lock pin insertion hole rotationally moved to a predetermined insertion position by actuating the turning mechanism.

Accordingly, if the rotor head is turned in the state of the insertion preparation position, the lock pin insertion hole rotationally moved up to the insertion position is located at an insertion allowed position, in the lock position of the lock mechanism, and thereby, the lock pin pressed against the surface of the brake disk is smoothly and securely inserted into the lock pin hole.

Preferably, the above wind turbine generator further includes a lock pin insertion state monitoring device that detects an operation situation of the locking device and inputs the result to the control unit, and accordingly, it can be confirmed that the lock pin is securely inserted into the lock pin hole. In other words, whether or not the state of the lock pin is in any of the non-lock position, the insertion preparation position, and the lock position can be precisely determined and recognized.

A method for locking the rotation of a rotor head of a wind turbine generator related to the invention includes: a brake mechanism including a brake disk provided in a drive system that rotates together with a rotor head and drives a generator; a lock mechanism that fixes the rotation of the rotor head by inserting a lock pin, which moves in an axial direction, into a pin hole provided in the brake disk; a turning mechanism that rotates the rotor head as needed; a control unit that performs various controls with respect to the wind turbine generator, including the operation of the brake mechanism, the lock mechanism and the turning mechanism; a remote operation unit that outputs to the control unit a command to lock the rotor head by means of the lock mechanism; and a lock pin hole position monitoring device that detects the current position of the lock pin hole, which is used to determine whether or not the lock pin can be inserted, and that inputs this position to the control unit. A lock operation of the control unit that has received the command to lock the rotor head includes: a first operation stage of actuating the brake mechanism after pitch feathering, fixing the rotation of the rotor head, and measuring the azimuth angle of the fixed position; a second operation stage of releasing the operation of the brake mechanism to turn the rotor head up to the vicinity of a position just before a prescribed azimuth angle; a third operation stage of actuating the brake mechanism to fix the rotor head at a position in the vicinity of the position just before the azimuth angle; a fourth operation stage of moving the lock pin from the non-lock position apart from the surface of the brake disk to an insertion preparation position where the lock pin is pressed against the surface of the brake disk at the position in the vicinity of the position just before a turning direction of the lock pin insertion hole, in a state where the brake force of the brake mechanism is reduced; and a fifth operation stage of determining whether or not the lock pin can be inserted into the lock pin insertion hole rotationally moved to a predetermined insertion position by actuating the turning mechanism, using the lock pin hole position monitoring device, and of inserting and fixing the lock pin and actuating the brake mechanism to fix the rotor head only when it is determined that the lock pin can be inserted.

According to such a method for locking the rotation of the rotor head of the wind turbine generator, if the lock mechanism is operated by means of a remote operation, whether or not the lock pin can be inserted at the current position of the lock pin hole can be automatically determined, and the lock pin can be securely inserted to fix the rotation of the rotor head.

### Advantageous Effects of Invention

According to the above-described invention, since the rotor head of the wind turbine generator can be securely locked (fixed) at a prescribed azimuth angle by means of a remote operation and the rotation thereof can be prevented, access to the wind turbine generator by a helicopter or the like is safely allowed.

Additionally, secure operation of the lock mechanism can be confirmed by providing the lock pin insertion state monitoring device.

### Brief Description of Drawings

Fig. 1 is a schematic configuration diagram illustrating one embodiment of a wind turbine generator related to the invention.
Fig. 2 is a flowchart illustrating a control procedure performed by a remote operation for locking the rotation of a rotor head by a control unit illustrated in Fig. 1.
Fig. 3 is a configuration view illustrating the outline of a generator drive mechanism adopting a hydraulic drive type.
Fig. 4 is a view illustrating an arrangement example of lock pin holes provided in a brake disk as seen from a rotor head side.
Fig. 5 is an explanatory view illustrating a lock pin movement situation of a lock mechanism, and illustrating a non-lock position, an insertion preparation position, and a lock position sequentially from an upper part.
Fig. 6 is a view illustrating a configuration example in which hydraulic pressure is adopted for a moving mechanism of a lock pin moving mechanism, with the left side of a paper surface being the non-lock position and the right side of the paper surface being the lock position.
Fig. 7 is a front view illustrating the outline of the wind turbine generator.
Fig. 8 is a configuration view illustrating the outline of a generator drive mechanism adopting an increasing gear type.
Fig. 9 is a configuration view illustrating the outline of a generator drive mechanism adopting a direct drive type.

### Description of Embodiments

Hereinafter, one embodiment of a wind turbine generator related to the invention will be described with reference to the drawings.

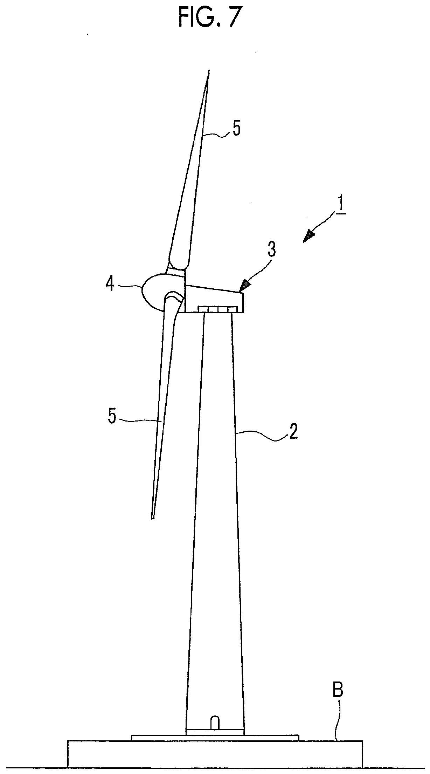

A wind turbine generator 1 illustrated in Fig. 7 has a post (also referred to as a "tower") 2 that is erected on a base B, a nacelle 3 that is installed at an upper end of the post 2, and a rotor head 4 that is rotatably supported around a substantially horizontal rotational axis and is provided at the nacelle 3. In addition, when the wind turbine generator 1 is an off-shore wind turbine, any of a floating type or a type in which the base B is provided at the seabed may be adopted.

A plurality of (for example, three) wind turbine blades 5 are attached to the rotor head 4 radially around the rotational axis of the rotor head. Accordingly, the force of the wind that has hit the wind turbine blades 5 from the direction of the rotational axis of the rotor head 4 is converted into the power that rotates the rotor head 4 around the rotational axis.

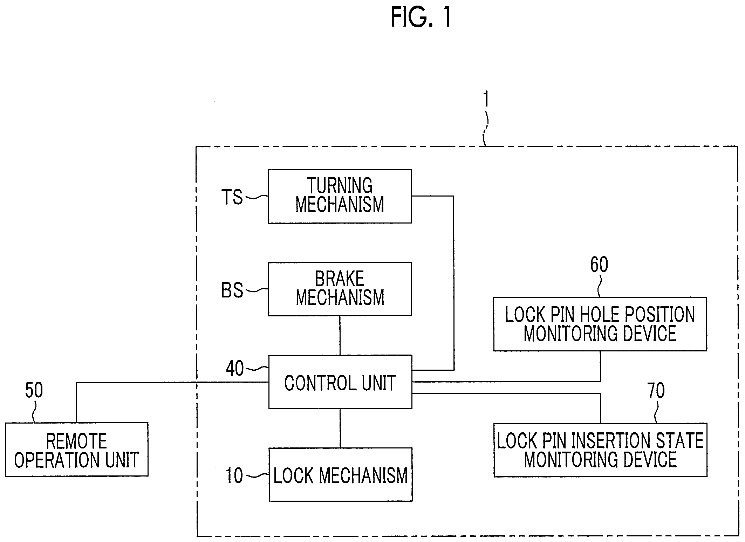

The wind turbine generator 1 of the present embodiment, for example, as illustrated in Figs. 1 to 6, is equipped with a brake mechanism BS equipped with a brake disk 12 provided in a drive system that rotates together with the rotor head 4 and drives a generator 25; a lock mechanism 10 that fixes the rotation of the rotor head 4 by inserting a lock pin 13, which moves in an axial direction, into one of lock pin holes 17 provided in the brake disk 12; a turning mechanism TS that rotates the rotor head 4 as required; a control unit 40 that performs various controls with respect to the wind turbine generator 1, including the operation of the brake mechanism BS, the lock mechanism 10, and the turning mechanism TS; a remote operation unit 50 that outputs to the control unit 40 a command to lock the rotor head by means of the lock mechanism 10; and a lock pin hole position monitoring device that detects the current position of the lock pin hole 17, which is used to determine whether or not the lock pin 13 can be inserted, and that inputs this position to the control unit 40.

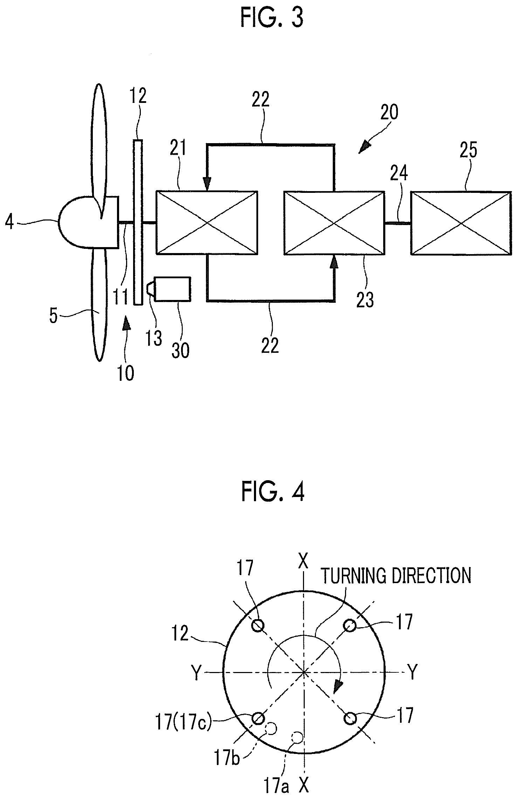

As the generator drive type of the above-described wind turbine generator 1, there is a hydraulic drive type illustrated in Fig. 3 in addition to the above-described increasing gear type of Fig. 8 and the direct drive type illustrated in Fig. 9.

Although the wind turbine generator 1 equipped with the generator drive mechanism 20 adopting the hydraulic drive type illustrated in Fig. 3 and the lock mechanism 10 applied to the generator drive mechanism 20 will be described below, the invention can also be similarly applied to lock mechanisms 10A, 10A', and 10B, of the wind turbine generator 1 adopting the generator drive mechanism of the above-described increasing gear type or the above-described direct drive type.

In the generator drive mechanism 20 of the hydraulic drive type illustrated in Fig. 3, a hydraulic pump 21 is driven by a main shaft 11 that rotates integrally with the rotor head 4. The hydraulic pump 21 is coupled to a hydraulic motor 23 via hydraulic piping 22 that forms a hydraulic circulation circuit.

The hydraulic pressure generated in the hydraulic pump 21 is supplied to the hydraulic motor 23 through the hydraulic piping 22, and the hydraulic motor 23 is driven by this hydraulic pressure. As a result, the generator 25 coupled to an output shaft 24 of the hydraulic motor 23 generates electricity as the hydraulic motor 23 as a driving source. In addition, the hydraulic pressure that has driven the hydraulic motor 23 is returned to the hydraulic pump 21 through the hydraulic piping 22.

The generator drive mechanism 20 of such a hydraulic drive type is also equipped with a brake disk 12 attached to the main shaft 11 that rotates integrally with the rotor head 4. The brake disk 12 is a disk-like member that rotates integrally with the main shaft 11, and constitutes the brake mechanism BS that reduces the rotational speed of the rotor head 4 and the main shaft 11 with a frictional force and stops the rotor head and the main shaft.

The lock mechanism 10 is a device that mechanically prevents rotation, using the brake mechanism BS attached to a shaft section, such as the main shaft 11, which is a shaft section of the drive system that rotates together with the rotor head 4 and drives the generator 25. The brake mechanism BS in this case is not particularly limited regarding to a combined use or a non-combined use with a mechanical brake.

The lock mechanism 10 is, for example, as illustrated in Fig. 4, a device that mechanically prevents rotation by providing the brake disk 12 with the lock pin holes 17 in advance and inserting the lock pin 13, which moves in the axial direction of the main shaft 11, into any one of the lock pin holes 17. In addition, it is desirable that a tip portion side of the lock pin 13 forms a tapered surface and thereby has a smaller diameter than the other portions.

Additionally, the wind turbine blades 5 and the lock pin holes 17 are assembled so as to always have the same positional relationship. For example, if the wind turbine blades 5 are in a state where the wind turbine blades have stopped in a Y-shape, the lock pin holes are assembled so as to be always at the positions of 45 degrees, 135 degrees, 225 degrees, and 315 degrees.

Fig. 4 is a view when the brake disk 12 is seen from the rotor head 4 side, and for example, four lock pin holes 17 are drilled at pitches of 90 degrees on the same circumference. In the brake disk 12, as indicated by an arrow in the drawing, the direction of turning by the turning mechanism TS is clockwise.

In addition, it is desirable that the shape of the lock pin hole 17 also has a truncated-cone shape in which an inlet side of the lock pin hole is made to have a larger diameter in conformity with the tip shape of the lock pin 13.

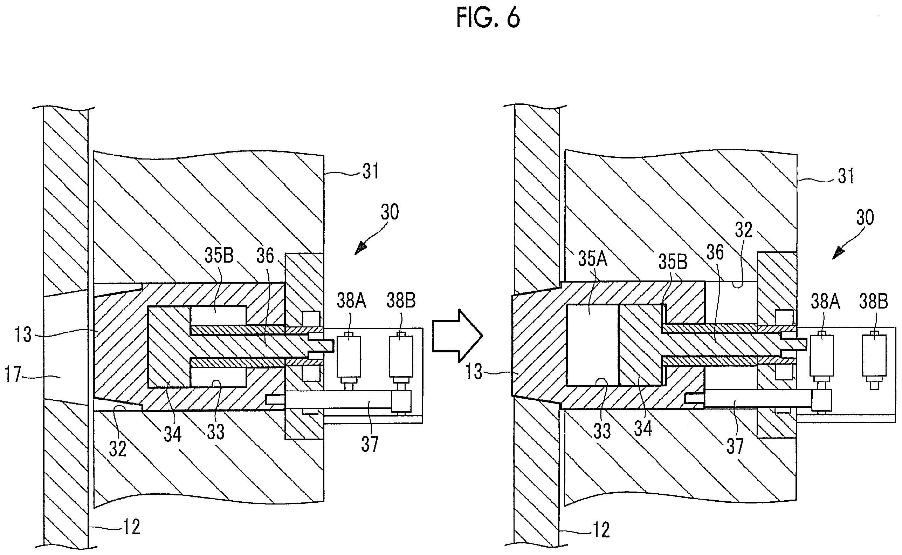

The drive type of the lock pin moving mechanism 30 that moves the lock pin 13 includes an electric-powered type, an electromagnetic type, a spring type, or the like other than the hydraulic type illustrated in Fig. 6, and is not particularly limited.

The lock pin moving mechanism 30 illustrated in Fig. 6 is supported such that the lock pin 13 is slidable in a movement direction (axial direction of the main shaft 11), along a guide hole 32 of a main body 31 that is fixedly installed in a proper place inside the nacelle 3. A cylinder chamber 33 is formed inside the lock pin 13, and a piston 34 installed inside the cylinder chamber 33 is fixed to the main body 31.

The lock pin moving mechanism 30 is a hydraulic mechanism equipped with the piston 34, and the inside of the cylinder chamber 33 is divided (separated) into two of a hydraulic space 35A on the tip side of the lock pin 13 and a hydraulic space 35B on a root side of the lock pin 13 by the piston 34. Also, the hydraulic spaces 35A and 35B are coupled to a hydraulic pressure supply source (not illustrated).

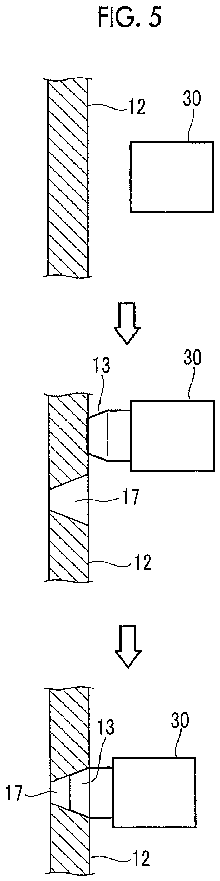

Therefore, the lock pin 13 is at a non-lock position where the lock pin retreats into the main body 31 along the guide hole 32 and a piston rod 36 and is spaced apart from the brake disk 12, in a state where hydraulic pressure is supplied to the hydraulic space 35B (left side of a paper surface of Fig. 5). On the other hand, the lock pin 13 is at a lock position where the lock pin protrudes to the outside of the main body 31 along the guide hole 32 and the piston rod 36 and is inserted into the lock pin hole 17 of the brake disk 12, through a process, such as positioning described below, in a state where hydraulic pressure is supplied to the hydraulic space 35A (right side of the paper surface of Fig. 5).

The non-lock position and the lock position of such a lock pin 13 are detected by a lock pin insertion state monitoring device 70.

The lock pin insertion state monitoring device 70 illustrated in Fig. 6 has a configuration equipped with a rod member 37 that operates integrally with the lock pin 13, and a pair of limit switches (monitoring sensors) 38A and 38B that are arranged in a slide direction of the rod member 37 and are fixed at predetermined positions. In this case, when both of the pair of limit switches 38A and 38B detect the rod member 37, the position of the lock pin is determined to be the non-lock position, and when only the monitoring sensor 38A arranged on the brake disk 12 side detects the rod member 37, the position of the lock pin is determined to be the lock position.

In the above-described lock pin insertion state monitoring device 70, it is only necessary to appropriately select and adopt an arbitrary one from a non-contact type sensor and a contact type sensor.

In addition, as specific examples of the non-contact type sensor, for example, there are sensors using a laser beam, infrared rays, ultrasonic waves, image diagnosis, magnetism, light, and the like. As specific examples of the contact type sensor, there are sensors in which a detecting pin, a detecting lever, or the like, and a limit switch, a proximity switch, or the like interlocked.

Additionally, both of the hydraulic spaces 35A and 35B of the above-described lock pin moving mechanism 30 are coupled to the hydraulic pressure supply source and hydraulically operate in both directions because not only insertion timing of the lock pin 13 but setting of a suitable pulling-out force is required. However, for example, hydraulic pressure may be supplied only to any one of the hydraulic spaces by combining a return spring.

Incidentally, the diameter of the lock pin hole 17 is set to be slightly larger than the external diameter of the lock pin 13 in order to make small the rattling when the lock pin 13 is inserted. Therefore, in order to completely insert the lock pin 13 or in order to avoid galling or the like during pin insertion, it is necessary to precisely match the position of the lock pin hole 17 that rotationally moves, with the lock pin 13 at a fixed position.

Additionally, since it is necessary to confirm positive insertion and pulling-out of the lock pin 13 during access to and separation from the wind turbine generator 1, monitoring in a pin insertion state is required.

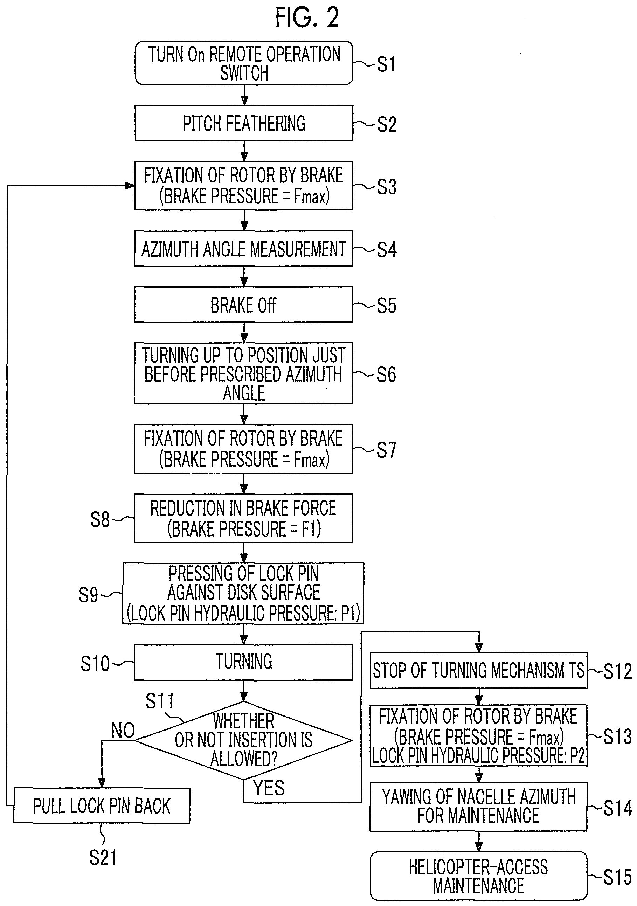

In the following, an operation procedure of the lock mechanism 10 of the above-described configuration by means of a remote operation, that is, a method of locking the rotation of the rotor head of the wind turbine generator, will be described with reference to a flowchart of Fig. 2.

In the wind turbine generator 1 of the above-described configuration, a lock operation (operation procedure) of the control unit 40 that has received a command to lock the rotor head from the remote operation unit 50 is equipped with a first operation stage to a fifth operation stage to be described below.

The first operation stage is to actuate the brake mechanism BS after a remote operation switch is made to perform pitch feathering, fixes the rotation of the rotor head 4, and measures the azimuth angle of the fixed position. In addition, the first operation stage is equivalent to Steps S2 to S4 in the flowchart of Fig. 2.

The second operation stage is to release the operation of the brake mechanism BS to turn the rotor head 4 up to the vicinity of a position just before a prescribed azimuth angle. In addition, the second operation stage is equivalent to Steps S5 and S6 in the flowchart of Fig. 2.

The third operation stage is to actuate the brake mechanism BS to fix the rotor head 4 at a position in the vicinity of the position just before the azimuth angle. In addition, the third operation stage is equivalent to Step S7 in the flowchart of Fig. 2.

The fourth operation stage is to move the lock pin 13 from the non-lock position apart from the surface of the brake disk 12 to an insertion preparation position where the lock pin 13 is pressed against the surface of the brake disk 12 at the position in the vicinity of the position just before a turning direction of the lock pin insertion hole 17, in a state where the brake force of the brake mechanism BS is reduced. In addition, the fourth operation stage is equivalent to Steps S8 and S9 in the flowchart of Fig. 2.

The fifth operation stage is to determine whether or not the lock pin can be inserted into the lock pin insertion hole 17 rotationally moved to a predetermined insertion position by actuating the turning mechanism TS, using the lock pin hole position monitoring device 60, and to insert and fix the lock pin 13 and actuate the brake mechanism BS to fix the rotor head 4 only when it is determined that the lock pin can be inserted. In addition, the fifth operation stage is equivalent to Step S10 to S14 in the flowchart of Fig. 2.

In the following, the flowchart of Fig. 2 will be described in detail.

In a first Step S1, a state where a remote operation is allowed (the remote operation switch is turned on) by operating the remote operation switch of the remote operation unit 50 is brought about. This operation is carried out by means of a wireless remote operation from a helicopter when access to the wind turbine generator 1 is gained by the helicopter in order to carry out, for example, urgent maintenance. In addition, a remote operation is also allowed via a wire from land in advance, or a wireless remote operation is also allowed from the sea.

Thereafter, the process proceeds to the next Step S2 where pitch feathering is carried out.

This pitch feathering is to bring about a feather state where the pitch angle of the wind turbine blades 5 is parallel to a wind direction and to bring about a state where the rotary power of the rotor head 4 is not generated by a wind force.

After the pitch feathering is completed, the process proceeds to the next Step S3 where fixation of the rotor by the brake mechanism BS is carried out.

That is, the brake mechanism BS is actuated to apply a maximum brake force (Fmax) to the brake disk 12 and to fix the rotation of the rotor head 4 in a stopped state. In the following description, one of the lock pin holes 17 drilled in the brake disk 12 stops at, for example, the position of a lock pin hole 17a illustrated in Fig. 3.

Subsequently, in Step S4, azimuth angle measurement of the rotor head 4 in a fixed state is performed. Since this azimuth angle measurement is required for general operation control of the wind turbine generator 1, required data has only to be available from an existing measuring instrument (for example, a rotary encoder or an absolute encoder that is provided in the main shaft) included in the wind turbine generator 1.

After the azimuth angle measurement, the process proceeds to the next Step S5 where the operation of the brake mechanism BS is stopped (brake OFF). As a result, the rotor head 4 and the brake disk 12 are released from the brake force and brought into a rotatable state.

Then, the process proceeds to Step S6 where turning is carried out through low-speed rotation up to the position just before the prescribed azimuth angle by the turning mechanism TS.

As a result, the lock pin hole 17 rotationally moves, for example, from a position 17a to a position 17b, which are illustrated in Fig. 4. In this case, the prescribed azimuth angle is an azimuth angle of a position where the rotation of the rotor head 4 is fixed by the lock mechanism 10, and specifically, an azimuth angle where the lock pin 13 at the fixed position and the lock pin hole 17 for allowing the lock pin 13 to be inserted thereinto coincide with each other.

In the present embodiment, the three wind turbine blades 5 are provided at pitches of 120 degrees, and the prescribed azimuth angle suitable in this case reaches a value with which one of the three wind turbine blades 5 is fixed at a horizontal position.

Additionally, the turning mechanism TS of the present embodiment can be motorized by hydraulic pressure using the generator drive mechanism 20 of the hydraulic drive type or can be motorized by the pitch angle control of the wind turbine blade 5, and is not particularly limited to the above-described turning at low rotational speed. The above-described motorizing by hydraulic pressure is to operate the hydraulic pump 21 as a hydraulic motor with the supply hydraulic pressure from a service pump.

In addition, in the wind turbine generator 1 adopting the above-described generator drive mechanism of the increasing gear type or the direct drive type, it is only necessary to perform motorizing using the generators 16 and 16A as electric motors to carry out the turning at low rotational speed instead of the above-described motorizing by hydraulic pressure.

If the turning up to the position just before the prescribed azimuth angle is completed in this way, the processing proceeds to the next Step S7 where fixation of the rotor by the brake mechanism BS is carried out. Even in this Step S7, the brake mechanism BS is actuated to apply the maximum brake force (Fmax) to the brake disk 12 and to fix the rotation of the rotor head 4 in a stopped state.

In the next Step S8, the brake force of the brake mechanism BS is reduced from the maximum value Fmax to F1. As a result, the rotor head 4 and the brake disk 12 are brought into a state where the turning thereof is allowed by the reduction in the brake force.

Thereafter, by proceeding to Step S9, the lock mechanism 10 is operated to project the lock pin 13 to a wind turbine front with a hydraulic pressure P1 from the state at the non-lock position illustrated in an upper part of Fig. 5 and to press the tip of the lock pin against the surface of the brake disk 12 to bring about a state illustrated in a middle part of Fig. 5 near the lock position.

The hydraulic pressure P1 in this case is set to a value (P1 < P2) less than that of a hydraulic pressure P2 when the lock pin 13 is inserted into the lock pin hole 17 as will be described below. For this reason, a tip pressing force of the lock pin 13 against the surface of the brake disk 12 does not reach so large a value, and does not hinder the turning of the brake disk 12 to be described below.

In addition, it is desirable to arrange a sliding pad made of a material having a low frictional coefficient and an easily-worn material, on the tip of the lock pin 13, or the surface of the brake disk 12 on which the tip of the lock pin 13 slides, and to protect the lock pin 13 or the brake disk 12.

In the next Step S10, turning is carried out by the same turning mechanism TS as in Step S6. The brake disk 12 at the position just before the prescribed azimuth angle is slightly rotated in Steps S6 and S7 by this turning, and thereby the lock pin hole 17 moves toward the lock pin 13 at the fixed position. That is, since the lock pin 13 is pressed against the surface of the brake disk 12 at a position corresponding to the prescribed azimuth angle, the lock pin 13 waits for the lock pin hole 17 to rotationally move up to a position 17c illustrated in Fig. 3 by turning in a state where projection of the tip portion of the lock pin is prevented.

In the next Step S11, it is determined whether or not the lock pin 13 can be inserted into the lock pin hole 17. In this case, the position of the lock pin hole 17 is detected or estimated by the lock pin hole position monitoring device 60 by using position detection means utilizing, for example, a laser beam, infrared light, ultrasonic waves, image diagnosis, magnetism, light, or the like, and it is confirmed that there is no deviation from the position of the lock pin 13 at the fixed position.

As a result, when there is no deviation between the positions of the lock pin 13 and the lock pin hole 17 and it is determined that the lock pin 13 can be inserted ("YES"), the position of the lock pin hole 17c and the position of the lock pin 13 that have arrived at a predetermined azimuth angle position by means of continuation of the turning coincide with each other on the same axis. For this reason, since a wall surface of the brake disk 12 that prevents the projection of the lock pin 13 is eliminated, the lock pin 13 is inserted into the lock pin hole 17c by the hydraulic pressure P1 and is brought into the lock position.

Thereafter, the process proceeds to Step S12 where the turning mechanism TS is stopped, and then, the process proceeds to the next Step S13 where fixation of the rotor head 4 and the brake disk 12 by the brake mechanism BS is performed. In this case, the maximum brake force (Fmax) is applied to the brake disk 12 similar to Step S7, and the hydraulic pressure P2 larger than the hydraulic pressure P1 in the above-described Step S9 is applied to the lock pin 13 inserted into the lock pin hole 17.

As a result, the rotor head 4 and the brake disk 12 are not only firmly fixed by the brake mechanism, but the lock pin 13 of the lock mechanism 10 is inserted into the lock pin hole 17 and receives a strong pressing force in a projecting direction by the hydraulic pressure P2, and then a state where the rotation of the brake disk 12 is mechanically prevented by the lock mechanism 10 is brought about. That is, a locked state where the rotation of the rotor head 4 is securely prevented by the cooperation between the brake mechanism and the lock mechanism 10 is brought about.

After the rotor head 4 is brought into the locked state in this way, the process proceeds to the next Step S14 where yawing to the azimuth of the nacelle for maintenance is carried out.

Therefore, in the next Step S15, safe access to the wind turbine generator 1 by a helicopter is allowed, and work, such as required maintenance, is carried out.

Incidentally, in determining whether or not the lock pin can be inserted in the above-described Step S11, when it is determined that the lock pin 13 cannot be inserted ("NO"), the process proceeds to Step S21 where the lock pin 13 is pulled back to the non-lock position. Here, the state where the lock pin cannot be inserted includes not only the state of a positional deviation between the lock pin 13 and the lock pin hole 17 with a small dimensional difference between an external diameter and an internal diameter, but also the state of a positional deviation such that galling occurs during insertion.

When it is determined that the lock pin cannot be inserted in this way, the turning is stopped and the processing returns to Step S3 where fixation of the rotor by the brake mechanism is carried out. Then, the process of Step S4 to S11 are again carried out until the rotor head 4 becomes a locked state in which the rotation of the rotor head 4 is securely prevented by the cooperation between the brake mechanism and the lock mechanism 10 is brought about.

That is, in the lock mechanism 10 of the present embodiment, while the rotor head 4 is rotated at a low speed by the turning mechanism TS, the position of the lock pin hole 17 is detected by the lock pin hole monitoring device 60, and it is detected and confirmed that the lock pin hole has a suitable positional relationship with the lock pin 13 on a fixed side. Thereafter, the lock pin 13 is inserted into the lock pin hole 17 and the brake mechanism BS is actuated and the rotation of the rotor head is completely fixed.

Additionally, because the rotor head 4 is rotated at a low speed in a state where the lock pin 13 is actuated, the brake disk 12 rotates in a state where the tip portion of the lock pin 13 has contacted the surface of the brake disk. Therefore, when the lock pin 13, which is pressed in the direction of the brake disk 12, coincides with the position of the lock pin hole 17, the lock pin is inserted with a relatively low impact force.

According to the wind turbine generator 1 of such a present embodiment, since the device is equipped with the lock pin hole position monitoring device 60 that detects the current position of the lock pin hole 17 for determining whether or not the lock pin 13 can be inserted, and that inputs this detection result to the control unit 40, even if the lock mechanism 10 is operated by means of a remote operation, whether or not the lock pin can be inserted at the current position of the lock pin hole 17 can be automatically and precisely determined. Therefore, the lock pin 13 can be securely inserted into the lock pin hole 17, and rotation of the rotor head 4 can be fixed.

Therefore, since the rotor head 4 of the wind turbine generator 1 can be securely fixed at a prescribed azimuth angle by means of a remote operation and the rotation thereof can be prevented, safe access to the wind turbine generator by a helicopter or the like is allowed. Additionally, since secure operation of the lock mechanism 10 can be remotely confirmed by providing the lock pin insertion state monitoring device 70, safer access is allowed.

Incidentally, in the above-described embodiment, the hydraulic pressure serving as the pressing force of the lock pin 13 is made variable as P1 or P2. However, a control logic may be simplified by making the hydraulic pressure constant. In addition, when the pressing force of the lock pin 13 is made variable, a wear force can be reduced on the sliding surface of the brake disk 12 that abuts against the lock pin 13. Moreover, if the pressing force is made variable in a plurality of stages or in a continuous manner, the countermeasure (additional push-in) when insertion of the lock pin 13 is imperfect is also allowed. In this case, a combined use with the lock pin insertion state monitoring device 70 is required.

Additionally, when the lock pin 13 is pulled out, it is required for the lock mechanism 10 to have a sufficient pulling-out force. That is, this is because a load is continuously applied to the rotor head 4 even in the locked state, and therefore, a considerable load is required for pulling-out due to the contact between the lock pin 13 and the lock pin hole 17 even during the operation of brake mechanism BS.

During this pulling-out, the lock pin 13 is pulled out with the brake mechanism BS actuated, by giving a rotor head unlocking command from the remote operation unit 40. As for the pin pulling-out force in this case, the hydraulic pressure of the lock mechanism 10 may be made constant so as to simplify a control logic, or the hydraulic pressure may be variably controlled so as to allow a reduction in galling and a strong pull-out operation.

Additionally, when the lock pin 13 does not come off immediately, in order not to damage the lock mechanism 10, it is desirable to repeat ON/OFF of the pull-out operation as required or to appropriately perform low-speed turning in both a normal direction and a reverse direction and positively change the positional relationship between the lock pin 13 and the lock pin hole 17, to search for a coming-off timing.

The installation position of the above-described brake disk 12 is not particularly limited regardless of a low-speed shaft or a high-speed shaft so long as a shaft of the drive system that rotates with the rotor head 4 and drives the generator is provided.

In addition, the invention is not limited to the above-described embodiment, and various changes can be appropriately made without departing from the scope of the invention.

### Reference Signs List

- 1:: wind turbine generator
- 2:: tower
- 3:: nacelle
- 4:: rotor head
- 5:: wind turbine blade
- 10:: lock mechanism
- 11:: main shaft
- 12:: brake disk
- 13:: lock pin
- 17:: lock pin hole
- 20:: generator drive mechanism
- 21:: hydraulic pump
- 22:: hydraulic piping
- 23:: hydraulic motor
- 25:: generator
- 30:: lock pin moving mechanism
- 31:: main body
- 32:: guide hole
- 33:: cylinder chamber
- 34:: piston
- 35a, 35b:: hydraulic space
- 36:: piston rod
- 37:: rod member
- 38a, 38b:: monitoring sensor
- 40:: control unit
- 50:: remote operation unit
- 60:: lock pin hole position monitoring device
- 70:: lock pin insertion state monitoring device
- BS:: brake mechanism
- TS:: turning mechanism

## Claims

1. A wind turbine generator (1) comprising:
a brake mechanism (BS) including a brake disk (12) provided in a drive system that transmits rotation from a rotor head (4) to a generator (25);
a lock mechanism (10) that fixes the rotor head (4) by inserting a lock pin (13) into a lock pin hole (17) provided in the brake disk (12);
a turning mechanism (TS) that rotates the rotor head (4);
a control unit (40) that controls the operation of at least the brake mechanism (BS), the lock mechanism (10) and the turning mechanism (TS);
a remote operation unit (50) that outputs to the control unit (40) a command to lock the rotor head (4) by means of the lock mechanism (10); and
a lock pin hole position monitoring device (60) that detects or estimates the current position of the lock pin hole (14), which is used to determine whether or not the lock pin (13) can be inserted, and that inputs this position to the control unit (40),
**characterized in that** the lock mechanism (10) includes a drive mechanism that allows the lock pin (13) to project or retreat in an axial direction of the lock pin (13), and includes a non-lock position where a tip of the lock pin (13) is at a position apart from a surface of the brake disk (12), an insertion preparation position where the tip of the lock pin (13) is made to abut against and is pressed against the surface of the brake disk (12) at a position in the vicinity of a position just before a turning direction of the lock pin hole (17), and a lock position where the lock pin (13) is inserted into and fixed to the lock pin hole (17) rotationally moved to a predetermined insertion position by actuating the turning mechanism (TS).

2. The wind turbine generator (1) according to Claim 1, further comprising:
a lock pin insertion state monitoring device (70) that detects an operation situation of the locking device and inputs the result to the control unit (40).

3. A method for locking the rotation of a rotor head (4) of a wind turbine generator (1), the wind turbine generator (1) including: a brake mechanism (BS) including a brake disk (12) provided in a drive system that rotates together with a rotor head (4) and drives a generator (25); a lock mechanism (10) that fixes the rotation of the rotor head (4) by inserting a lock pin (13), which moves in an axial direction, into a lock pin hole (17) provided in the brake disk (12); a turning mechanism (TS) that rotates the rotor head (4) as needed; a control unit (10) that performs various controls with respect to the wind turbine generator (1), including the operation of the brake mechanism (BS), the lock mechanism (10) and the turning mechanism (TS); a remote operation unit (50) that outputs to the control unit (40) a command to lock the rotor head (4) by means of the lock mechanism (10); and a lock pin hole position monitoring device (60) that detects the current position of the lock pin hole (17), which is used to determine whether or not the lock pin (13) can be inserted, and that inputs this position to the control unit (40),
**characterized in that** a lock operation of the control unit (40) that has received the command to lock the rotor head (4) includes:
a first operation stage of actuating the brake mechanism (BS) after pitch feathering, fixing the rotation of the rotor head (4), and measuring the azimuth angle of the fixed position;
a second operation stage of releasing the operation of the brake mechanism (BS) to turn the rotor head (4) up to the vicinity of a position just before a prescribed azimuth angle;
a third operation stage of actuating the brake mechanism (BS) to fix the rotor head (4) at a position in the vicinity of the position just before the azimuth angle;
a fourth operation stage of moving the lock pin (13) from the non-lock position apart from the surface of the brake disk (12) to an insertion preparation position where the lock pin (13) is pressed against the surface of the brake disk (12) at the position in the vicinity of the position just before a turning direction of the lock pin hole (17), in a state where the brake force of the brake mechanism (BS) is reduced; and
a fifth operation stage of determining whether or not the lock pin (13) can be inserted into the lock pin hole (17) rotationally moved to a predetermined insertion position by actuating the turning mechanism (TS), using the lock pin hole position monitoring device (60), and of inserting and fixing the lock pin (13) and actuating the brake mechanism (BS) to fix the rotor head (4) only when it is determined that the lock pin (13) can be inserted.

## Patentansprüche

1. Windkraftanlage (1), umfassend:
einen Bremsmechanismus (BS), umfassend eine Bremsscheibe (12), die in einem Antriebssystem vorgesehen ist, das Drehung von einem Rotorkopf (4) zu einem Generator (25) überträgt,
einen Verriegelungsmechanismus (10), der den Rotorkopf (4) durch Einführen eines Verriegelungsstiftes (13) in ein Verriegelungsstiftloch (17), das in der Bremsscheibe (12) vorgesehen ist, arretiert,
einen Drehmechanismus (TS), der den Rotorkopf (4) dreht,
eine Steuerungseinheit (40), die den Betrieb von mindestens dem Bremsmechanismus (BS), dem Verriegelungsmechanismus (10) und dem Drehmechanismus (TS) steuert,
eine Fernbedienungseinheit (50), die an die Steuerungseinheit (40) einen Befehl ausgibt, um den Rotorkopf (4) mittels des Verriegelungsmechanismus (10) zu verriegeln, und
eine Verriegelungsstiftlochpositions-Übervvachungsvorrichtung (60), die die aktuelle Position des Verriegelungsstiftlochs (14), die verwendet wird, um zu bestimmen, ob der Verriegelungsstift (13) eingeführt werden kann oder nicht, detektiert oder schätzt und die diese Position in die Steuerungseinheit (40) eingibt,
**dadurch gekennzeichnet, dass** der Verriegelungsmechanismus (10) einen Antriebsmechanismus umfasst, der es ermöglicht, den Verriegelungsstift (13) in einer axialen Richtung des Verriegelungsstiftes (13) vor oder zurück zu bewegen, und eine Nicht-Verriegelungsposition, in der sich eine Spitze des Verriegelungsstiftes (13) an einer von einer Oberfläche der Bremsscheibe (12) getrennten Position befindet, eine Einführvorbereitungsposition, in der die Spitze des Verriegelungsstiftes (13) dazu gebracht wird, an der Oberfläche der Bremsscheibe (12) an einer Position in der Nähe einer Position knapp vor einer Drehrichtung des Verriegelungsstiftlochs (17) anzuliegen und gegen diese gedrückt zu werden, und eine Verriegelungsposition, in der der Verriegelungsstift (13) in das Verriegelungsstiftloch (17), das durch Betätigen des Drehmechanismus (TS) drehend zu einer vorgegebenen Einführposition bewegt wird, eingeführt und daran arretiert wird, umfasst.

2. Windkraftanlage (1) nach Anspruch 1, ferner umfassend:
eine Verriegelungsstifteinführzustands-Überwachungsvorrichtung (70), die einen Betriebszustand der Verriegelungsvorrichtung detektiert und das Ergebnis in die Steuerungseinheit (40) eingibt.

3. Verfahren zum Verriegeln der Drehung eines Rotorkopfes (4) einer Windkraftanlage (1), wobei die Windkraftanlage (1) umfasst: einen Bremsmechanismus (BS), der eine Bremsscheibe (12) umfasst, die in einem Antriebssystem vorgesehen ist, das sich gemeinsam mit einem Rotorkopf (4) dreht und einen Generator (25) antreibt, einen Verriegelungsmechanismus (10), der durch Einführen eines Verriegelungsstiftes (13), der sich in einer axialen Richtung bewegt, in ein Verriegelungsstiftloch (17), das in der Bremsscheibe (12) vorgesehen ist, die Drehung des Rotorkopfes (4) arretiert, einen Drehmechanismus (TS), der den Rotorkopf (4) nach Bedarf dreht, eine Steuerungseinheit (10), die verschiedene Steuerungen in Bezug auf die Windkraftanlage (1), umfassend den Betrieb des Bremsmechanismus (BS), des Verriegelungsmechanismus (10) und des Drehmechanismus (TS), durchführt, eine Fernbedienungseinheit (50), die einen Befehl an die Steuerungseinheit (40) ausgibt, um den Rotorkopf (4) mittels des Verriegelungsmechanismus (10) zu verriegeln, und eine Verriegelungsstiftlochpositions-Überwachungsvorrichtung (60), die die aktuelle Position des Verriegelungsstiftlochs (17), die verwendet wird, um zu bestimmen, ob der Verriegelungsstift (13) eingeführt werden kann oder nicht, detektiert und die diese Position in die Steuerungseinheit (40) eingibt,
**dadurch gekennzeichnet, dass** ein Verriegelungsbetrieb der Steuerungseinheit (40), die den Befehl empfangen hat, um den Rotorkopf (4) zu verriegeln, umfasst:
eine erste Betriebsphase des Betätigens des Bremsmechanismus (BS) nach Drehen auf Fahnenstellung, Arretieren der Drehung des Rotorkopfes (4) und Messen des Azimutwinkels der arretierten Position,
eine zweite Betriebsphase des Lösens der Betätigung des Bremsmechanismus (BS), um den Rotorkopf (4) bis in die Nähe einer Position knapp vor einem vorgegebenen Azimutwinkel zu drehen,
eine dritte Betriebsphase des Betätigens des Bremsmechanismus (BS), um den Rotorkopf (4) an einer Position in der Nähe der Position knapp vor dem Azimutwinkel zu arretieren,
eine vierte Betriebsphase des Bewegens des Verriegelungsstiftes (13) von der Nicht-Verriegelungsposition, die von der Oberfläche der Bremsscheibe (12) getrennt ist, zu einer Einführungsvorbereitungsposition, in der der Verriegelungsstift (13) an der Position in der Nähe der Position knapp vor einer Drehrichtung des Verriegelungsstiftlochs (17) gegen die Oberfläche der Bremsscheibe (12) gedrückt wird, in einem Zustand, in dem die Bremskraft des Bremsmechanismus (BS) reduziert ist, und
eine fünfte Betriebsphase des Bestimmens, ob der Verriegelungsstift (13) in das Verriegelungsstiftloch (17) eingeführt werden kann, das durch Betätigen des Drehmechanismus (TS) durch Drehung zu einer vorgegebenen Einführposition bewegt wird, des Verwendens der Verriegelungsstiftlochpositions-Überwachungsvorrichtung (60) und des Einführens und Arretierens des Verriegelungsstiftes (13) und des Betätigens des Bremsmechanismus (BS), um den Rotorkopf (4) zu arretieren, nur dann, wenn bestimmt wird, dass der Verriegelungsstift (13) eingeführt werden kann.

## Revendications

1. Aérogénérateur (1) comprenant :
un mécanisme de frein (BS) comprenant un disque de frein (12) prévu dans un système d'entraînement qui transmet la rotation d'une tête de rotor (4) à un générateur (25) ;
un mécanisme de blocage (10) qui fixe la tête de rotor (4) en insérant une broche de blocage (13) dans un trou de broche de blocage (17) prévu dans le disque de frein (12) ;
un mécanisme de rotation (TS) qui fait tourner la tête de rotor (4) ;
une unité de commande (40) qui commande au moins le fonctionnement du mécanisme de frein (BS), du mécanisme de blocage (10) et du mécanisme de rotation (TS) ;
une unité de commande à distance (50) qui transmet à l'unité de commande (40), une commande pour bloquer la tête de rotor (4) au moyen du mécanisme de blocage (10) ; et
un dispositif de surveillance de position de trou de broche de blocage (60) qui détecte ou estime la position actuelle du trou de broche de blocage (14), qui est utilisé pour détecter si la broche de blocage (13) peut être insérée ou pas, et qui entre cette position dans l'unité de commande (40),
**caractérisé en ce que** le mécanisme de blocage (10) comprend un mécanisme d'entraînement qui permet à la broche de blocage (13) de faire saillie ou de se rétracter dans une direction axiale de la broche de blocage (13) et comprend une position sans broche dans laquelle une pointe de la broche de blocage (13) est dans une position à distance d'une surface du disque de frein (12), une position de préparation d'insertion dans laquelle la pointe de la broche de blocage (13) est faite pour venir en butée contre et est comprimée contre la surface du disque de frein (12) dans une position à proximité d'une position juste avant une direction de rotation du trou de broche de blocage (17) et une position de blocage dans laquelle la broche de blocage (13) est insérée dans et fixée au trou de broche de blocage (17) déplacé en rotation vers une position d'insertion prédéterminée en actionnant le mécanisme de rotation (TS).

2. Aérogénérateur (1) selon la revendication 1, comprenant en outre :
un dispositif de surveillance d'état d'insertion de broche de blocage (70) qui détecte une situation de fonctionnement du dispositif de blocage et entre le résultat dans l'unité de commande (40).

3. Procédé pour bloquer la rotation d'une tête de rotation (4) d'un aérogénérateur (1), l'aérogénérateur (1) comprenant : un mécanisme de frein (BS) comprenant un disque de frein (12) prévu dans un système d'entraînement qui tourne conjointement avec une tête de rotor (4) et entraîne un générateur (25) ; un mécanisme de blocage (10) qui fixe la rotation de la tête de rotor (4) en insérant une broche de blocage (13) qui se déplace dans une direction axiale, dans un trou de broche de blocage (17) prévu dans le disque de frein (12) ; un mécanisme de rotation (TS) qui fait tourner la tête de rotor (4) si nécessaire ; une unité de commande (10) qui réalise différentes commandes par rapport à l'aérogénérateur (1), comprenant l'actionnement du mécanisme de frein (BS), du mécanisme de blocage (10) et du mécanisme de rotation (TS) ; une unité de commande à distance (50) qui transmet à l'unité de commande (40), une commande pour bloquer la tête de rotor (4) au moyen du mécanisme de blocage (10) ; et un dispositif de surveillance de position de trou de broche de blocage (60) qui détecte la position actuelle du trou de broche de blocage (17) qui est utilisée pour déterminer si la broche de blocage (13) peut être insérée ou pas et qui entre cette position dans l'unité de commande (40),
**caractérisé en ce qu'**une opération de blocage de l'unité de commande (40) qui a reçu la commande pour bloquer la tête de rotor (4) comprend :
une première étape de commande consistant à actionner le mécanisme de frein (BS) après la variation cyclique de pas, fixer la rotation de la tête de rotor (4) et mesurer l'angle azimutal de la position fixée ;
une deuxième étape de commande consistant à libérer la commande du mécanisme de frein (BS) pour faire tourner la tête de rotor (4) jusqu'à la proximité d'une position juste avant un angle azimutal prescrit ;
une troisième étape de commande consistant à actionner le mécanisme de frein (BS) pour fixer la tête de rotor (4) dans une position à proximité de la position juste avant l'angle azimutal ;
une quatrième étape de commande consistant à actionner la broche de blocage (13) de la position sans blocage par rapport à la surface du disque de frein (12) à une position de préparation d'insertion dans laquelle la broche de blocage (13) est comprimée contre la surface du disque de frein (12) dans la position à proximité de la position juste avant une direction de rotation du trou de broche de blocage (17), dans un état dans lequel la force de freinage du mécanisme de frein (BS) est réduite ; et
une cinquième étape de commande consistant à déterminer si la broche de blocage (13) peut être insérée dans le trou de broche de blocage (17) ou pas, déplacée en rotation dans une position d'insertion prédéterminée en actionnant le mécanisme de rotation (TS), utiliser le dispositif de surveillance de position de trou de broche de blocage (60) et insérer et fixer la broche de blocage (13) et actionner le mécanisme de frein (BS) pour fixer la tête de rotor (4) uniquement lorsque l'on détermine que la broche de blocage (13) peut être insérée.
